# EUROPEAN PATENT APPLICATION

(11) **EP 4 844 930 A1**
(43) Date of publication of application: **25.11.2026**
(21) Application number: 25820233.2
(22) Date of filing: 30.05.2025
(51) Int. Cl.: H01M 50/451, H01M 50/446, H01M 50/431, H01M 50/414, H01M 10/052

(54) **SEPARATOR FOR LITHIUM SECONDARY BATTERY AND LITHIUM SECONDARY BATTERY INCLUDING SAME**

(30) Priority: 03.06.2024 KR 20240072643
(71) Applicant: LG Energy Solution, Ltd., Seoul 07335 (KR)
(72) Inventor: KIM, Yu-Bae, Daejeon 34122 (KR); LEE, Byeong-Kyu, Daejeon 34122 (KR); LEE, Seung-Hyun, Daejeon 34122 (KR); KA, Kyung-Ryun, Daejeon 34122 (KR)
(74) Representative: Hoffmann Eitle
(86) International application number: PCT/KR2025/007471
(87) International publication number: WO 2025/254399

(57) **Abstract**

A separator for a lithium secondary battery, includes: a porous polymer substrate; and a porous coating layer formed on at least one surface of the porous polymer substrate, the porous coating layer including inorganic particles and a binder polymer. The inorganic particles include surface-modified calcium carbonate (CaCO₃). The surface-modified calcium carbonate includes first surface-modified calcium carbonate, second surface-modified calcium carbonate, or a combination thereof. The first surface-modified calcium carbonate includes first calcium carbonate; and a fatty acid-derived functional group chemically bonded to a surface of the first calcium carbonate. The second surface-modified calcium carbonate includes second calcium carbonate; and an organosilane-derived functional group chemically bonded to a surface of the second calcium carbonate.

## Description

### TECHNICAL FIELD

This application is based on and claims priority from Korean Patent Application No. 10-2024-0072643 filed on June 3, 2024, with the Korean Intellectual Property Office, the disclosure of which is incorporated herein in its entirety by reference.

The present disclosure relates to a separator for a lithium secondary battery and a lithium secondary battery including the same.

### BACKGROUND ART

Lithium secondary batteries are being widely used not only as power sources for portable electronic devices such as notebook computers, mobile phones, digital cameras, and camcorders, but also as power sources for electric vehicles. As lithium secondary batteries are being widely used in various fields, concerns regarding the safety of lithium secondary batteries are emerging. For example, as the lithium secondary batteries develop to high capacity and high power, the probability of abnormal temperature rise during charging and discharging process is increasing, which may lead to a so-called thermal runaway phenomenon in which a flame explodes at a high temperature, and in the event of thermal runaway, the fire may not be easily extinguished. Thus, safety issues are recognized as one of the more important issues to be resolved in high-capacity, high-output lithium secondary batteries.

### DISCLOSURE

### Technical Problem

The present disclosure provides a separator for a lithium secondary battery including a porous coating layer that includes surface-modified calcium carbonate, which exhibits excellent dispersibility and wettability even without including a dispersant or a wetting agent.

The present disclosure provides a separator for a lithium secondary battery that includes surface-modified calcium carbonate and is capable of preventing or delaying thermal transfer during the thermal runaway event.

The present disclosure provides a separator for a lithium secondary battery having low surface roughness due to the excellent dispersibility of the surface-modified calcium carbonate.

The present disclosure provides a lithium secondary battery having excellent resistance characteristics by excluding dispersants and wetting agents from the porous coating layer.

### Technical Solution

According to one aspect of the present disclosure, a separator for a lithium secondary battery and a lithium secondary battery including the same are provided as described in the following embodiments.

According to a first embodiment, a separator for a lithium secondary battery includes: a porous polymer substrate; and a porous coating layer formed on at least one surface of the porous polymer substrate. The porous coating layer includes inorganic particles and a binder polymer, in which the inorganic particles include surface-modified calcium carbonate (CaCO₃). The surface-modified calcium carbonate includes first surface-modified calcium carbonate, second surface-modified calcium carbonate, or a combination thereof. The first surface-modified calcium carbonate includes first calcium carbonate; and a fatty acid-derived functional group chemically bonded to a surface of the first calcium carbonate, and the second surface-modified calcium carbonate includes second calcium carbonate; and an organosilane-derived functional group chemically bonded to a surface of the second calcium carbonate.

According to a second embodiment, the surface-modified calcium carbonate in the first embodiment may include surface-modified precipitated calcium carbonate (PCC).

According to a third embodiment, D₅₀ (average particle diameter) of the surface-modified calcium carbonate in the first or second embodiment may be in a range of about 0.1 µm to 2.0 µm.

According to a fourth embodiment, the surface-modified calcium carbonate in any one of the first to third embodiments may have an aspect ratio in a range of about 1.0 to 1.5.

According to a fifth embodiment, the fatty acid-derived functional group in any one of the first to fourth embodiments may be derived from a fatty acid having 10 to 24 carbon atoms or a salt thereof.

According to a sixth embodiment, the organosilane-derived functional group in any one of the first to fifth embodiments may be derived from an organosilane selected from vinyltrimethoxysilane, vinyltriethoxysilane, vinyltris(β-methoxyethoxy)silane, β-(3,4-epoxycyclohexyl)ethyltrimethoxysilane, γ-(2-aminoethyl)aminopropyltrimethoxysilane, γ-glycidoxypropyltrimethoxysilane, γ-glycidoxypropyltrimethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)-γ-aminopropylmethyldimethoxysilane, N-β(aminoethyl)-γ-aminopropyltrimethoxysilane, N-β(aminoethyl)-γ-aminopropyltriethoxysilane, 3-aminopropyltrimethoxysilane, 3-aminopropyltriethoxysilane, N-phenyl-γ-aminopropyltrimethoxysilane, γ-chloropropyltrimethoxysilane, γ-mercaptopropyltrimethoxysilane, bis-[3-(triethoxysilyl)propyl]-tetrasulfide (TESPT), bis-[3-(triethoxysilyl)propyl]-disulfide, or a combination thereof.

According to a seventh embodiment, the inorganic particles in any one of the first to sixth embodiments may further include Pb(Zr,Ti)O₃ (PZT), Pb₁₋ₓLaₓZr_{1-y}Ti_{y}O₃ (PLZT), Pb(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, AlO(OH), Al₂O₃·H₂O, lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0<y<3, 0<z<7) such as LiI-Li₂S-P₂S₅, and a mixture thereof.

According to an eighth embodiment, the binder polymer in any one of the first to seventh embodiments may include poly(methyl methacrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose, or a mixture of two or more thereof.

According to a ninth embodiment, the surface-modified calcium carbonate in any one of the first to eighth embodiments may have a sedimentation rate (%/hr) of -2.5 or greater, as determined by Turbiscan analysis.

According to a tenth embodiment, a content of the fatty acid-derived functional group in any one of the first to ninth embodiments may be in a range of about 0.5 parts by weight to 5 parts by weight based on 100 parts by weight of the first surface-modified calcium carbonate, and a content of the organosilane-derived functional group may be in a range of about 0.5 parts by weight to 5 parts by weight based on 100 parts by weight of the second surface-modified calcium carbonate.

According to an eleventh embodiment, a lithium secondary battery includes: a positive electrode; a negative electrode; and the separator of any one of the first to tenth embodiments.

### Advantageous Effects

According to one embodiment of the present disclosure, a slurry for forming a porous coating layer including surface-modified calcium carbonate may have excellent dispersibility, and thus may not require a dispersant.

According to one embodiment of the present disclosure, a slurry for forming a porous coating layer including surface-modified calcium carbonate may have excellent wettability, and thus may not require a wetting agent.

The separator for a lithium secondary battery according to one embodiment of the present disclosure may include surface-modified calcium carbonate and may exhibit excellent dispersibility and wettability, so that the porous coating layer may have excellent dispersibility and wettability even without including a dispersant or a wetting agent.

The separator for a lithium secondary battery according to one embodiment of the present disclosure may include surface-modified calcium carbonate and may prevent or delay heat transfer during a thermal runaway event due to its excellent dispersibility and wettability.

The separator for a lithium secondary battery according to one embodiment of the present disclosure may include surface-modified calcium carbonate and may have low surface roughness due to its excellent dispersibility.

The lithium secondary battery according to one embodiment of the present disclosure may have excellent resistance characteristics because the porous coating layer of the separator does not include a dispersant or a wetting agent.

The lithium secondary battery according to one embodiment of the present disclosure may prevent or delay heat transfer between batteries during a thermal runaway event.

### DESCRIPTION OF DRAWINGS

The following drawings attached hereto exemplify embodiments of the present disclosure and serve to further understand the technical idea of the present disclosure together with the content of the disclosure described above. Therefore, the present disclosure should not be construed as being limited to the matters illustrated in the drawings.

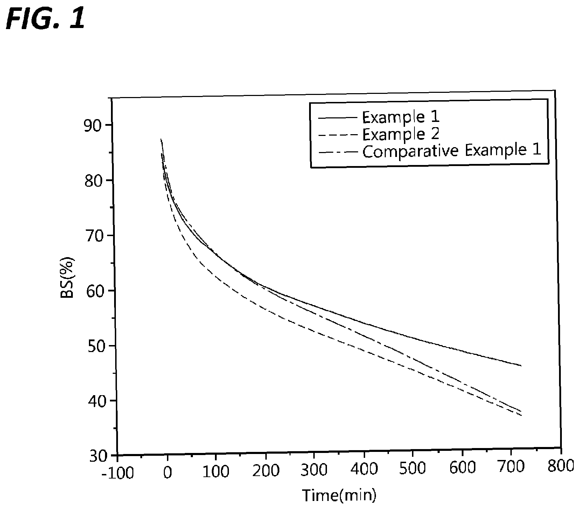

FIG. 1 is a graph evaluating the dispersibility of slurries of Examples and Comparative Examples.

### BEST MODE

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

The terms used herein are only used to describe exemplary embodiments and are not intended to limit the present disclosure. Singular expressions include plural expressions unless the context clearly indicates otherwise.

### <Definition>

Throughout the present specification, when a part is said to "include" a component, this does not exclude other components, but rather includes other components, unless otherwise specifically stated.

Throughout the present specification, the expression "A and/or B" means "A or B, or both."

Throughout the present specification, D₅₀ (average particle diameter) refers to the particle diameter at the 50% point in the cumulative particle number distribution by particle size. That is, D₅₀ refers to the particle diameter at the 50% point in the cumulative particle number distribution by particle size. In addition, D₁₀ refers to the particle diameter at the 10% point, and D₉₀ refers to a particle diameter at the 90% point, in the cumulative particle number distribution by particle size.

The particle diameter may be measured using a laser diffraction method. For example, powder to be measured is dispersed in a dispersion medium and introduced into a commercially available laser diffraction particle size measurement device (*e.g.*, Microtrac S3500) to measure the difference in diffraction pattern according to particle size when the particles pass through the laser beam, thereby calculating the particle size distribution. The D₁₀, D₅₀, and D₉₀ may be measured by determining the particle diameters at the points where the cumulative particle number distribution by particle size reaches 10%, 50%, and 90%, respectively, in the measurement device. Alternatively, the particle diameter may be measured using a sedigraph.

Throughout the present disclosure, terms such as "substantially" are used to indicate values at or near the stated numerical value, taking into account inherent manufacturing and material tolerances associated with the stated meaning. Such terms are employed to assist in understanding the disclosure and to prevent unscrupulous infringers from unfairly exploiting disclosures that refer to precise or absolute numerical values.

In terms of the safety characteristics of lithium secondary batteries, when a lithium secondary battery overheats and undergoes thermal runaway or when the separator is penetrated, it may lead to an explosion and pose a high risk of thermal transfer between cells.

Meanwhile, polyolefin-based porous polymer substrates, which are commonly used as separators in lithium secondary batteries, exhibit severe thermal shrinkage behavior at temperatures above 100 °C due to their material properties and the characteristics of the manufacturing process involving stretching, thereby causing short circuits between the positive and negative electrodes. To address such safety issues in lithium secondary batteries, efforts have been made to use heat-resistant nonwoven fabrics made of fibers with less thermal shrinkage and higher melting points than polyolefins, as separators.

Meanwhile, a separator has been proposed, which includes a porous polymer substrate having a plurality of pores, in which a slurry of an excessive amount of inorganic particles and a binder polymer is coated on at least one surface of the porous polymer substrate to form a porous coating layer. The inorganic particles included in the porous coating layer generally exhibit excellent heat resistance, thereby preventing or suppressing short circuits between the positive and negative electrodes even when the lithium secondary battery overheats. However, the inorganic particles have high surface energy, resulting in poor wettability with organic solvents and a tendency to aggregate with one another, which leads to low dispersibility. Furthermore, beyond excellent heat resistance, there is a demand for the development of inorganic particles having superior properties capable of preventing or delaying thermal transfer in the event of thermal runaway.

The present disclosure provides a separator for a lithium secondary battery, which exhibits excellent dispersibility and wettability even though the porous coating layer including surface-modified calcium carbonate does not include a dispersant or a wetting agent.

The present disclosure provides a separator for a lithium secondary battery, according to one embodiment.

According to one embodiment of the present disclosure, the separator for a lithium secondary battery, includes: a porous polymer substrate; and a porous coating layer formed on at least one surface of the porous polymer substrate. The porous coating layer includes inorganic particles and a binder polymer, in which the inorganic particles include surface-modified calcium carbonate (CaCO₃). The surface-modified calcium carbonate includes first surface-modified calcium carbonate, second surface-modified calcium carbonate, or a combination thereof. The first surface-modified calcium carbonate includes first calcium carbonate; and a fatty acid-derived functional group chemically bonded to a surface of the first calcium carbonate, and the second surface-modified calcium carbonate includes second calcium carbonate; and an organosilane-derived functional group chemically bonded to a surface of the second calcium carbonate.

### <Porous Polymer Substrate>

In one embodiment of the present disclosure, a highly porous polymer substrate refers to a substrate having a plurality of pores formed therein as a porous ion-conducting barrier that allows ions to pass while blocking electrical contact between the negative electrode and the positive electrode. The pores are structured to be interconnected with each other, so that gas or liquid is able to pass from one side of the substrate to the other side.

The material constituting the porous polymer substrate may be any organic or inorganic material having electrical insulation. According to one embodiment, from the perspective of imparting a shutdown function to the substrate, a thermoplastic resin may be used as a constituent material of the substrate. The shutdown function refers to a function in which, when the battery temperature rises, the thermoplastic resin melts and closes the pores of the porous substrate, thereby blocking the movement of ions and suppressing thermal runaway of the battery. As for the thermoplastic resin, a thermoplastic resin having a melting point of approximately less than 200 °C is suitable, and according to one embodiment, polyolefin may be used as the thermoplastic resin.

In addition to polyolefin, the porous polymer substrate may further include at least one polymer resin selected from polyethylene terephthalate, polybutylene terephthalate, polyacetal, polyamide, polycarbonate, polyimide, polyether ether ketone, polyethersulfone, polyphenylene oxide, polyphenylene sulfide, and polyethylene naphthalate. The porous polymer substrate may be a nonwoven fabric, a porous polymer film, or a laminate of two or more thereof, but is not limited thereto.

In the present disclosure, the porous polymer substrate may have a thickness in the range of about 3 µm to 12 µm, or about 5 µm to 12 µm. Within this thickness range, sufficient conductive barrier function may be implemented, and the resistance of the separator may be maintained at an appropriate level.

In one embodiment of the present disclosure, the weight average molecular weight of the polyolefin may be about 100,000 to 5,000,000. When the weight average molecular weight is in the range of about 100,000 to 5,000,000, sufficient mechanical properties may be secured as well as appropriate shutdown characteristics and molding characteristics may be maintained. In addition, the puncture strength of the porous polymer substrate may be about 300 gf or more from the viewpoint of improving the manufacturing yield. The puncture strength of the porous substrate refers to the maximum puncture load (gf) measured by performing a puncture test under the conditions of a needle tip curvature radius of 0.5 mm and a puncture speed of 4 mm/sec using a Kato tech KES-G5 handy compression tester.

The porous polymer substrate may be any planar porous polymer substrate used in an electrochemical device, and according to one embodiment, an insulating thin film having high ion permeability and mechanical strength, a pore diameter generally ranging from about 10 nm to 200 nm, and a thickness generally ranging from about 5 µm to 12 µm may be used as the porous polymer substrate.

### <Surface-Modified Calcium Carbonate>

The separator for a lithium secondary battery according to the present disclosure includes a porous polymer substrate and a porous coating layer positioned on at least one surface of the porous polymer substrate. The porous coating layer includes inorganic particles and a binder polymer, and the inorganic particles include surface-modified calcium carbonate (CaCO₃).

In one embodiment of the present disclosure, the inorganic particles included in the porous coating layer include surface-modified calcium carbonate. The surface-modified calcium carbonate includes first surface-modified calcium carbonate, second surface-modified calcium carbonate, or a combination thereof. The first surface-modified calcium carbonate includes first calcium carbonate having a fatty acid-derived functional group chemically bonded to its surface, and the second surface-modified calcium carbonate includes second calcium carbonate having an organosilane-derived functional group chemically bonded to its surface.

### Precipitated Calcium Carbonate

The first calcium carbonate and the second calcium carbonate may have the same or different material or morphology.

In one embodiment of the present disclosure, the surface-modified calcium carbonate may include surface-modified precipitated calcium carbonate (PCC). Each of the first calcium carbonate and the second calcium carbonate may independently include precipitated calcium carbonate.

In the present specification, calcium carbonate may be classified into ground calcium carbonate (GCC) and precipitated calcium carbonate (PCC).

The ground calcium carbonate (GCC) is also referred to as natural calcium carbonate. The ground calcium carbonate may be obtained from minerals containing calcium carbonate selected from, for example, marble, chalk, limestone, and mixtures thereof, and may be produced through wet and/or dry processes such as mechanical grinding, screening, and/or classification. The particles of the ground calcium carbonate may have irregular shapes, a wide range of particle sizes, and a broad size distribution. For example, the D₅₀ of the ground calcium carbonate may range from about 2 µm to about 10 µm, and even after undergoing grinding processes, it may be difficult for the D₅₀ to fall below the lower limit of the range.

In one embodiment of the present disclosure, the precipitated calcium carbonate (PCC), also referred to as synthetic calcium carbonate, may be obtained through a chemical precipitation reaction. For example, the precipitated calcium carbonate may be obtained by precipitation following a reaction between carbon dioxide and calcium hydroxide in an aqueous medium, or by precipitation of calcium ions and carbonate ions, such as CaCl₂ and Na₂CO₃, from a solution. According to one embodiment, the method for preparing the precipitated calcium carbonate may include a lime-soda process or the Solvay process, which is a by-product of ammonia production.

In one embodiment of the present disclosure, the precipitated calcium carbonate may include calcite, aragonite, vaterite, or a combination thereof. The precipitated calcium carbonate may exist in a crystalline form of calcite, aragonite, or vaterite, and each of these crystal forms may have many different polymorphs (crystal habits). Calcite may have a trigonal system exhibiting typical habits such as scalenohedral (S-PCC), rhombohedral (R-PCC), hexagonal prismatic, pinacoidal, colloidal (C-PCC), cubic, and prismatic (P-PCC) forms. The aragonite may have an orthorhombic system exhibiting typical habits with various combinations of twinned hexagonal prismatic crystals, thin and elongated prismatic forms, curved blade-like shapes, sharp pyramidal forms, chisel-like crystals, branched tree-like forms, and coral- or worm-like forms. The vaterite may belong to a hexagonal crystal system.

In one embodiment of the present disclosure, the precipitated calcium carbonate may have a BET specific surface area of about 5 m²/g to 100 m²/g. The BET specific surface area refers to a value calculated from the amount of nitrogen gas adsorbed at liquid nitrogen temperature (77 K) using, for example, BELSORP-mini II manufactured by BEL Japan.

The precipitated calcium carbonate may be ground (*e.g.,* pulverized) by a dry or wet grinding process. The grinding may be carried out using a conventional grinding device, such as, a ball mill, a rod mill, a vibration mill, a roll crusher, a centrifugal impact mill, a vertical bead mill, an attrition mill, a pin mill, a hammer mill, a grinder, a shredder, a de-clamper, a knife cutter, or one or more of these devices.

In one embodiment of the present disclosure, the D₅₀ of the surface-modified calcium carbonate may be in the range of about 0.1 µm to 2.0 µm or about 0.2 µm to 1.8 µm in order to serve as the inorganic particles and maintain a low surface roughness of the porous coating layer formed therefrom. When the D₅₀ of the surface-modified calcium carbonate falls within the above-described range, the dispersibility of the slurry for forming the porous coating layer including the surface-modified calcium carbonate may be further improved, the surface roughness of the porous coating layer formed from the slurry may be lower, the mechanical properties may be further enhanced, and the internal resistance of the lithium secondary battery manufactured therefrom may be lower.

In one embodiment of the present disclosure, the surface-modified calcium carbonate may have an aspect ratio in the range of about 1.0 to 1.5, about 1.0 to 1.3, or about 1.0 to 1.2. The aspect ratio is defined as the ratio of the length of the major axis to the minor axis of the surface-modified calcium carbonate, and a value approaching 1 indicates a morphology that closely resembles a sphere. The aspect ratio may be calculated using a particle shape analyzer, such as QICPIC-LIXELL (Sympatec GmbH). As the aspect ratio becomes closer to 1, the modified calcium carbonate may be more uniformly distributed in the porous coating layer, the surface roughness of the porous coating layer may be lower, and the adhesion of the porous coating layer may be further improved.

### First Surface-Modified Calcium Carbonate and Second Surface-Modified Calcium Carbonate

The first surface-modified calcium carbonate of the present disclosure is first calcium carbonate having a fatty acid-derived functional group chemically bonded to its surface; and the second surface-modified calcium carbonate is second calcium carbonate having an organosilane-derived functional group chemically bonded to its surface.

In general, calcium carbonate is an ionically bonded compound and thus has high surface energy. Accordingly, when calcium carbonate is used as an inorganic particle and dissolved in a solvent, for example, an organic solvent, to prepare a slurry for forming a porous coating layer, the calcium carbonate particles tend to aggregate, resulting in poor dispersibility of the slurry. As a result, the surface roughness of the formed inorganic coating layer may be high, leading to inferior mechanical properties. Therefore, when a fatty acid-derived functional group, which is amphiphilic, is chemically bonded to the surface of calcium carbonate, or when an organosilane-derived functional group is chemically bonded to the surface, the first surface-modified calcium carbonate or the second surface-modified calcium carbonate may exhibit superior dispersibility in the slurry compared to the unmodified first or second calcium carbonate, due to the hydrophobic portion of the fatty acid or organosilane.

In one embodiment of the present disclosure, the fatty acid-derived functional group may be derived from a fatty acid having 10 to 24 carbon atoms, a fatty acid having 14 to 20 carbon atoms, or a fatty acid having 16 to 18 carbon atoms, or a salt thereof. The fatty acid having 10 to 24 carbon atoms, 14 to 20 carbon atoms, or 16 to 18 carbon atoms, or a salt thereof, may include, for example, octadecanoic acid (C₁₈H₃₆O₂), calcium octadecanoate, magnesium octadecanoate, zinc octadecanoate, hexadecanoic acid (C₁₆H₃₂O₂), calcium hexadecanoate, magnesium hexadecanoate, zinc hexadecanoate, or a combination thereof.

In one embodiment of the present disclosure, under alkaline conditions, the fatty acid undergoes deprotonation, and the deprotonated fatty acid reacts with calcium carbonate to yield first surface-modified calcium carbonate in which a fatty acid-derived functional group is chemically bonded to the surface of the first calcium carbonate.

In one embodiment of the present disclosure, the degree of modification by the fatty acid-derived functional group may correspond to about 0.5 parts by weight to 5 parts by weight, or about 1 part by weight to 3 parts by weight of the fatty acid reacting with calcium carbonate, based on 100 parts by weight of the first calcium carbonate. For example, the content of the fatty acid-derived functional group may fall within the range of about 0.5 parts by weight to 5 parts by weight, or about 1 part by weight to 3 parts by weight, based on 100 parts by weight of the first surface-modified calcium carbonate. When the content of the fatty acid falls within the above range, the dispersibility of the second surface-modified calcium carbonate in the slurry for forming the porous coating layer may be high, making the use of additives such as dispersants unnecessary, thereby allowing the separator to exhibit excellent resistance characteristics.

In one embodiment of the present disclosure, the organosilane-derived functional group may be derived from an organosilane selected from vinyltrimethoxysilane, vinyltriethoxysilane, vinyltris(β-methoxyethoxy)silane, β-(3,4-epoxycyclohexyl)ethyltrimethoxysilane, γ-(2-aminoethyl)aminopropyltrimethoxysilane, γ-glycidoxypropyltrimethoxysilane, γ-glycidoxypropyltrimethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)-γ-aminopropylmethyldimethoxysilane, N-β(aminoethyl)-γ-aminopropyltrimethoxysilane, N-β(aminoethyl)-γ-aminopropyltriethoxysilane, 3-aminopropyltrimethoxysilane, 3-aminopropyltriethoxysilane, N-phenyl-γ-aminopropyltrimethoxysilane, γ-chloropropyltrimethoxysilane, γ-mercaptopropyltrimethoxysilane, bis-[3-(triethoxysilyl)propyl]-tetrasulfide (TESPT), bis-[3-(triethoxysilyl)propyl]-disulfide, or a combination thereof.

In one embodiment of the present disclosure, second surface-modified calcium carbonate, in which organosilane-derived functional groups are chemically bonded to the surface of the second calcium carbonate, may be obtained by mixing second calcium carbonate and an organosilane together in distilled water with stirring, followed by centrifugation and drying (*e.g.*, at a temperature of 100 °C).

In one embodiment of the present disclosure, the degree of modification by the organosilane-derived functional group may correspond to about 0.5 parts by weight to 5 parts by weight, or about 1 part by weight to 3 parts by weight of the organosilane reacting with calcium carbonate, based on 100 parts by weight of the second calcium carbonate. For example, the content of the organosilane-derived functional group may fall within the range of about 0.5 parts by weight to 5 parts by weight, or about 1 part by weight to 3 parts by weight, based on 100 parts by weight of the second surface-modified calcium carbonate. When the content of the organosilane falls within the above range, the dispersibility of the second surface-modified calcium carbonate in the slurry for forming the porous coating layer may be high, making the use of additives such as dispersants unnecessary, thereby allowing the separator to exhibit excellent resistance characteristics. Further, when the content of the organosilane satisfies the above range, the surface of the second calcium carbonate may be sufficiently modified, thereby resulting in a separator with excellent wettability.

In one embodiment of the present disclosure, when surface-modified calcium carbonate is used as the inorganic particles, the dispersibility of the slurry for forming the porous coating layer including the same may be excellent due to the fatty acid-derived functional group or the organosilane-derived functional group. Accordingly, the porous coating layer may substantially include no separate dispersant. For example, the porous coating layer may include less than about 5 wt%, less than about 4 wt%, less than about 3 wt%, less than about 2 wt%, or less than about 1 wt% of a dispersant, based on 100 wt% of the porous coating layer. The dispersant may include ethylhydroxy ethyl cellulose (EHEC), methyl cellulose (MC), carboxymethyl cellulose sodium salt (CMC-Na), hydroxyalkyl methyl cellulose, or a combination of two or more thereof.

In one embodiment of the present disclosure, when surface-modified calcium carbonate is used as the inorganic particles, the hydrophobicity of the surface-modified calcium carbonate increases due to the fatty acid-derived functional group or the organosilane-derived functional group. Accordingly, the wettability of the separator produced therefrom is excellent, so the porous coating layer may substantially include no wetting agent. For example, the porous coating layer may include less than about 5 wt%, less than about 4 wt%, less than about 3 wt%, less than about 2 wt%, or less than about 1 wt% of a wetting agent, based on 100 wt% of the porous coating layer.

In one embodiment of the present disclosure, when Turbiscan analysis is performed on the surface-modified calcium carbonate, the sedimentation rate (%/hr) may be greater than or equal to -2.5.

In one embodiment of the present disclosure, the Turbiscan analysis may be performed by placing a slurry including the surface-modified calcium carbonate into, for example, a vial, and irradiating light having a wavelength in the range of 750 nm to 1200 nm, or 790 nm to 900 nm, for example, 880 nm, in a direction parallel to the ground.

In one embodiment of the present disclosure, the Turbiscan analysis may be performed at a temperature in the range of 10 °C to 40 °C, or 20 °C to 30 °C, for example, at a temperature of 25 °C.

In one embodiment of the present disclosure, the Turbiscan analysis may include irradiating a light source onto a slurry including the surface-modified calcium carbonate or inorganic particles, measuring forward scattering (FS) or back scattering (BS), and then measuring the back scattering ratio (%) over time, followed by plotting a graph showing the back scattering ratio (%) as a function of time or deriving the derivative thereof.

In one embodiment of the present disclosure, the sedimentation rate may be derived from the average slope of the graph showing the back scattering ratio (%) over time, or from the derivative of the graph.

### <Inorganic Particles>

In one embodiment of the present disclosure, the inorganic particles are not particularly limited as long as they are electrochemically stable. The inorganic particles that may be used herein are not particularly limited as long as they do not undergo oxidation and/or reduction reactions in the operating voltage range of the applied electrochemical device (*e.g.*, 0 V to 5 V based on Li/Li⁺). The use of inorganic particles having a high dielectric constant may contribute to an increase in the dissociation of electrolyte salts, such as lithium salts, in the liquid electrolyte, thereby improving the ionic conductivity of the electrolyte.

In one embodiment of the present disclosure, the inorganic particles may be included in an amount of about 70 parts by weight to 90 parts by weight, or about 80 parts by weight to 85 parts by weight, based on 100 parts by weight of the inorganic coating layer.

For the aforementioned reasons, the inorganic particles may include high-dielectric-constant inorganic particles having a dielectric constant of about 5 or more, or about 10 or more.

In addition, the average particle size of the inorganic particles is not particularly limited, but may be about 0.1 µm to 2.0 µm, or about 0.2 µm to 1.8 µm, in order to form a coating layer with a uniform thickness and an appropriate porosity. Within the above thickness range, suitable dispersibility may be maintained, and the thickness of the formed inorganic coating layer may be kept at an appropriate value.

In one embodiment of the present disclosure, in addition to the surface-modified calcium carbonate, the inorganic particles may further include Pb(Zr,Ti)O₃ (PZT), Pb₁₋ₓLaₓZr_{1-y}Ti_{y}O₃ (PLZT), Pb(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, AlO(OH), Al₂O₃·H₂O, lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0<y<3, 0<z<7) such as LiI-Li₂S-P₂S₅, and a mixture thereof.

In one embodiment of the present disclosure, the surface-modified calcium carbonate may be included in the inorganic particles in an amount of about 50 parts by weight or more, 60 parts by weight or more, about 70 parts by weight or more, or about 80 parts by weight or more, based on 100 parts by weight of the inorganic particles. When the content of the surface-modified calcium carbonate satisfies the above range, the resulting separator for a lithium secondary battery may more effectively prevent or delay thermal transfer in the event of thermal runaway.

### <Binder Polymer>

In one embodiment of the present disclosure, the porous coating layer may include a binder polymer having a glass transition temperature (T_{g}) in the range of -200 °C to 200 °C. The binder polymer may improve mechanical properties such as flexibility and elasticity of the final porous separator and effectively serve as a binder that connects and securely fixes the inorganic particles, thereby contributing to the prevention of degradation in the mechanical properties of the separator.

In addition, the binder polymer is not necessarily required to have ionic conductivity. However, using a polymer with ionic conductivity may further improve the performance of the electrochemical device. Therefore, the binder polymer may have a high dielectric constant. In fact, since the degree of dissociation of salt in the electrolyte depends on the dielectric constant of the electrolyte solvent, a higher dielectric constant of the binder polymer may enhance the dissociation of salts in the electrolyte. The dielectric constant of such a binder polymer may be in the range of about 1.0 to 100 (measured at a frequency of 1 kHz), and in one embodiment, it may be 10 or higher.

In one embodiment of the present disclosure, the binder polymer may exhibit a high degree of swelling upon impregnation with a liquid electrolyte due to gelation. The solubility parameter of the binder polymer, for example, the Hildebrand solubility parameter, may be in the range of about 15 MPa^{1/2} to 45 MPa^{1/2}, or about 15 MPa^{1/2} to 25 MPa^{1/2}, and about 30 MPa^{1/2} to 45 MPa^{1/2}. In one embodiment of the present disclosure, the solubility parameter range described above may be satisfied when hydrophilic polymers having many polar groups are used more than hydrophobic polymers such as polyolefins.

In one embodiment of the present disclosure, the inorganic particles may be packed in contact with each other and bound together by the binder polymer, thereby forming interstitial volumes between the inorganic particles. The interstitial volumes may serve as voids to form pores. The binder polymer may adhere the inorganic particles to one another to maintain their bonded state, for example, by connecting and fixing the particles together. Additionally, the pores of the separator may be formed from the interstitial volumes between the inorganic particles, which are voids defined by the closely packed or densely packed structure of the inorganic particles and the spaces substantially defined by their mutual contact.

In one embodiment of the present disclosure, the binder polymer may be any polymer commonly used in the relevant technical field without particular limitation. The binder polymer may be, for example, poly(methyl methacrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, or carboxyl methyl cellulose, or a mixture of two or more thereof.

The binder polymer may be a particulate binder or a soluble binder. The particulate binder refers to a case where the binder polymer is not dissolved in a solvent. The soluble binder refers to a case where the binder polymer is dissolved in a solvent. The solvent may be an aqueous solvent or an organic solvent.

In one embodiment of the present disclosure, the binder polymer may be included in an amount of about 10 parts by weight to 30 parts by weight, or about 15 parts by weight to 20 parts by weight, based on 100 parts by weight of the inorganic coating layer.

### <Method for Manufacturing a Separator for a Lithium Secondary Battery>

In one embodiment of the present disclosure, a separator for a lithium secondary battery may be manufactured by preparing a slurry for forming a porous coating layer through mixing a solvent for forming the porous coating layer with the above-described binder polymer and inorganic particles including surface-modified calcium carbonate, and applying the slurry onto a porous polymer substrate, followed by drying. The surface-modified calcium carbonate may be first surface-modified calcium carbonate, second surface-modified calcium carbonate, or a combination thereof, and the methods for preparing the first and second surface-modified calcium carbonates are as described above.

In one embodiment of the present disclosure, the solvent for forming the porous coating layer may be any organic solvent that enables uniformly disperse the inorganic particles and the binder polymer, without particular limitation.

In one embodiment of the present disclosure, the solvent for forming the coating layer may include: alicyclic hydrocarbons such as cyclopentane and cyclohexane; aromatic hydrocarbons such as toluene, xylene, and ethylbenzene; ketones such as acetone, methyl ethyl ketone, diisopropyl ketone, cyclohexanone, methylcyclohexane, and ethylcyclohexane; chlorinated aliphatic hydrocarbons such as methylene chloride, chloroform, and carbon tetrachloride; esters such as ethyl acetate, butyl acetate, γ-butyrolactone, and ε-caprolactone; acylnitriles such as acetonitrile and propionitrile; ethers such as tetrahydrofuran and diethyl ether of ethylene glycol; alcohols such as methanol, ethanol, isopropanol, ethylene glycol, and ethylene glycol monomethyl ether; and amides such as N-methylpyrrolidone and N,N-dimethylformamide. The solvent may include acetone in consideration of advantages during the drying process.

In one embodiment of the present disclosure, the solvent for forming the porous coating layer may be used alone or in a mixture of two or more of the aforementioned solvents. Among these, using a solvent having a low boiling point and high volatility enables the removal of the solvent in a short time and at a relatively low temperature. Examples thereof include acetone, toluene, cyclohexanone, cyclopentane, tetrahydrofuran, cyclohexane, xylene, N-methylpyrrolidone, and mixtures thereof.

In this case, the coating method is not particularly limited and may include any conventional method known in the art, such as dip coating, die coating, roll coating, comma coating, microgravure coating, doctor blade coating, reverse roll coating, Mayer bar coating, direct metering coating, or combinations thereof.

### <Lithium Secondary Battery>

The present disclosure provides a lithium secondary battery.

The lithium secondary battery includes a positive electrode, a negative electrode, a separator interposed between the positive electrode and the negative electrode, and an electrolyte.

In one embodiment of the present disclosure, the positive electrode may be manufactured by coating a positive electrode forming composition including a positive electrode active material, a binder, a conductive material, and a solvent, on a positive electrode current collector.

The positive electrode active material may be a conventional active material usable for positive electrodes of electrochemical devices. For example, the positive electrode active material may include lithium manganese oxide, lithium cobalt oxide, lithium nickel oxide, lithium iron oxide, or a lithium composite oxide made up of combinations thereof.

The positive electrode active material may be included in an amount of about 80 parts by weight to 99 parts by weight, or about 85 parts by weight to 98 parts by weight, based on 100 parts by weight of the total solid content of the positive electrode forming composition. When the content of the positive electrode active material is within the above range, excellent capacity characteristics may be achieved.

The positive electrode current collector is not particularly limited as long as it has conductivity without causing a chemical change in the battery. Examples of the positive electrode current collector include stainless steel, aluminum, nickel, titanium, calcined carbon, or aluminum or stainless steel surface-treated with carbon, nickel, titanium, or silver.

The binder serves as a component that assists in binding the positive electrode active material and the conductive material, as well as in binding to the current collector, and may typically be added in an amount of about 1 wt% to 30 wt% based on the total solid content of the positive electrode forming composition. Examples of the binder include polyvinylidene fluoride (PVDF), polyvinyl alcohol (PVA), carboxymethyl cellulose (CMC), starch, hydroxypropyl cellulose, regenerated cellulose, polyvinylpyrrolidone (PVP), tetrafluoroethylene, polyethylene, polypropylene, ethylenepropylene-diene terpolymer (EPDM), sulfonated EPDM, styrene-butadiene rubber, fluororubber, and various copolymers.

The conductive material may typically be added in an amount of about 1 wt% to 30 wt% based on the total solid content of the positive electrode forming composition.

The conductive material is not particularly limited as long as it is conductive and does not cause a chemical change in the battery, and examples thereof include graphites; carbon-based material such as carbon black, acetylene black, Ketjen black, channel black, furnace black, lamp black, and thermal black; conductive fibers such as carbon fibers or metal fibers; fluorocarbon; metal powder such as aluminum or nickel powder; conductive whiskers such as zinc oxide or potassium titanate; conductive metal oxides such as titanium oxide; and conductive materials such as polyphenylene derivatives. Examples of commercially available conductive materials include acetylene black products such as those from Chevron Chemical Company, Denka black (Denka Singapore Private Limited), and Gulf Oil Company; Ketjen black; EC series products (Armak Company); Vulcan XC-72 (Cabot Company); and Super P (Timcal Ltd.).

In addition, the positive electrode active material layer may optionally further include a dispersant as needed.

The dispersant may be used without particular limitation as long as it is suitable for use as a dispersant for the positive electrode. For example, an aqueous dispersant or an organic dispersant may be optionally selected and used as needed. Examples of the dispersant include cellulose-based compounds, polyalkylene oxides, polyvinyl alcohol, polyvinyl pyrrolidone, polyvinyl acetal, polyvinyl ether, polyvinyl sulfonic acid, polyvinyl chloride (PVC), polyvinylidene fluoride, chitosan derivatives, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile/butadiene/styrene (ABS) polymers, acrylonitrile/styrene/acrylic ester (ASA) polymers, mixtures of acrylonitrile/styrene/acrylic ester (ASA) polymers and propylene carbonate, styrene/acrylonitrile (SAN) copolymers, methyl methacrylate/acrylonitrile/butadiene/styrene (MABS) polymers, styrene-butadiene rubber, nitrile-butadiene rubber, and fluororubbers, which may be used either alone or in combination of two or more thereof. Hydrogenated nitrile-butadiene rubber (H-NBR) may also be used. When the positive electrode active material layer further includes a dispersant, the dispersibility of components, especially the conductive agent, in the positive electrode active material layer may be improved, but the present disclosure is not limited thereto.

In addition, the solvent may be one that is commonly used in the art, and examples thereof include dimethyl sulfoxide (DMSO), isopropyl alcohol, N-methylpyrrolidone (NMP), acetone, and water, which may be used either alone or in combination of two or more thereof. The amount of the solvent used is sufficient to dissolve or disperse the positive electrode active material, the conductive agent, and the binder, while providing a viscosity that allows for good coating thickness uniformity during electrode manufacturing, taking into account the coating thickness and production yield of the slurry.

The negative electrode according to the present disclosure may be manufactured by coating a negative electrode forming composition including the above-described negative electrode active material, binder, conductive agent, and solvent, onto a negative electrode current collector. In addition, the negative electrode forming composition may optionally further include a dispersant as needed.

As the negative electrode active material, a compound capable of reversible intercalation and deintercalation of lithium may be used. The negative electrode active material may include, for example, a silicon-based negative electrode active material exhibiting high capacity characteristics; a carbon-based negative electrode active material; metal composite oxides such as LixFe₂O₃ (0≤x≤1), LiₓWO₂ (0≤x≤1), SnₓMe₁₋ₓMe'_{γ}O*z* (where Me is Mn, Fe, Pb, or Ge; Me' is Al, B, P, Si, an element of Groups 1, 2, or 3 of the Periodic Table, or a halogen; 0<x≤1; 1≤y≤3; 1≤z≤8); lithium metal; lithium alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₆; conductive polymers such as polyacetylene; Li-Co-Ni based materials; titanium oxides; lithium titanium oxides; or combinations of two or more thereof. The silicon-based negative electrode active material may include one or more selected from Si, SiOₓ (0.1<x<5), Si-metal alloys, silicon oxide particles (SiOₓ, 0.1 < x < 5) doped with or chemically bonded to metals such as Mg, and alloys of Si and SiOₓ (0.1<x<5). The carbon-based negative electrode active material may include one or more selected from natural graphite, artificial graphite, amorphous hard carbon, low-crystalline soft carbon, carbon black, acetylene black, Ketjen black, Super P, graphene, and fibrous carbon.

The negative electrode current collector is not particularly limited as long as it has high conductivity without causing chemical changes in the battery, and examples thereof include copper, stainless steel, aluminum, nickel, titanium, calcined carbon, copper or stainless steel surface-treated with carbon, nickel, titanium, or silver, and aluminum-cadmium alloy. The negative electrode current collector may typically have a thickness of about 3 CFV to 500 µm, and like the positive electrode current collector, fine unevenness may be formed on the surface of the current collector to strengthen the bonding strength of the negative electrode active material. For example, the negative electrode collector may be used in various forms, such as a film, a sheet, a foil, a net, a porous body, a foam, a non-woven body, and the like.

The conductive material, binder, solvent, or dispersant included in the negative electrode forming composition is not particularly limited as long as it is generally applicable to electrode forming compositions. For example, the conductive material, binder, solvent, or dispersant described above in relation to the positive electrode forming composition may be applied.

In the present disclosure, the electrolyte may include a salt having a structure represented by A⁺B⁻, in which A⁺ is an alkali metal cation such as Li⁺, Na⁺, or K⁺, or a combination thereof, and B⁻ is an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination thereof. The salt may be dissolved or dissociated in an organic solvent including one or more selected from propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, ester compounds, and mixtures thereof, but is not limited thereto.

In one embodiment of the present disclosure, the organic solvent includes an ester-based compound, and according to one example, the ester-based compound may account for about 30 wt% or more, about 50 wt% or more, about 60 wt% or more, or about 65 wt% or more, based on 100 wt% of the organic solvent.

In one embodiment of the present disclosure, the ester-based compound may include at least one selected from isobutyl propionate, isoamyl propionate, isobutyl butyrate, isopropyl propionate, methyl propionate, ethyl propionate, propyl propionate, butyl propionate, methyl acetate, ethyl acetate, propyl acetate, butyl acetate, methyl butyrate, ethyl butyrate, propyl butyrate, and butyl butyrate.

In one embodiment of the present disclosure, the electrolyte additive may be optionally used for the purposes of improving battery lifespan characteristics, suppressing capacity degradation, and enhancing battery discharge capacity. Examples of the electrolyte additive include, but are not limited to, halogenated alkylene carbonate compounds such as vinylene carbonate (VC), fluoroethylene carbonate (FEC), and difluoroethylene carbonate (DFEC); pyridine; triethyl phosphite; triethanolamine; cyclic ethers; ethylenediamine; n-glyme; hexaphosphoric triamide; nitrobenzene derivatives; sulfur; quinonimine dyes; N-substituted oxazolidinones; N,N-substituted imidazolidines; ethylene glycol dialkyl ethers; ammonium salts; pyrrole; 2-methoxyethanol; and aluminum trichloride, which may be used either alone or in combination of two or more thereof. The electrolyte additive may be included, for example, in an amount of about 0.1 wt% to about 15 wt% based on the total weight of the electrolyte.

Hereinafter, the present disclosure is described in more detail through Examples. However, Examples below are intended to illustrate the present disclosure, and the scope of the present disclosure is not limited thereto.

### <Example 1>

### Preparation of First Surface-Modified Calcium Carbonate

To 200 mL of distilled water were added 10 g of nano-sized precipitated calcium carbonate (PCC), followed by the addition of sodium hydroxide. The mixture was stirred at 90 °C, after which 0.15 g of a saponified octadecanoic acid mixture was added as sodium octadecanoate. The resulting mixture was dehydrated using a filter press and dried at 80 °C using a box dryer to obtain a first surface-modified calcium carbonate. At this time, the octadecanoic acid-derived functional group was 1.48 parts by weight based on 100 parts by weight of calcium carbonate.

The first surface-modified calcium carbonate, as inorganic particles, and an acrylic binder were added to water at a weight ratio of 80:20 and stirred to prepare a slurry for forming a porous coating layer. The resulting slurry was applied to both surfaces of a polyethylene-based porous substrate having a thickness of 9 µm, and then dried to prepare a separator having an inorganic coating layer with a thickness of 1.5 µm formed on each surface.

### <Example 2>

### Preparation of Second Surface-Modified Calcium Carbonate

To 200 mL of distilled water were added 10 g of nano-sized precipitated calcium carbonate (PCC) and 0.2 g of 3-aminopropyltrimethoxysilane, followed by stirring at 25 °C for 20 minutes. The resulting mixture was then centrifuged at 3,000 rpm for 20 minutes to separate the precipitate from the supernatant. The precipitate was washed several times and subsequently subjected to a condensation reaction between hydroxyl groups on the PCC and silanol (Si-OH) groups of the 3-aminopropyltrimethoxysilane by heating in an oven at 100 °C for 12 hours, thereby obtaining second surface-modified calcium carbonate containing functional groups derived from 3-aminopropyltrimethoxysilane. At this time, the 3-aminopropyltrimethoxysilane-derived functional group was 1.96 parts by weight based on 100 parts by weight of calcium carbonate.

The second surface-modified calcium carbonate, as inorganic particles, and an acrylic binder were added to water at a weight ratio of 80:20 and stirred to prepare a slurry for forming a porous coating layer. The resulting slurry was applied to both surfaces of a polyethylene-based porous substrate having a thickness of 9 µm, and then dried to prepare a separator having an inorganic coating layer with a thickness of 1.5 µm formed on each surface.

### <Comparative Example 1>

A separator was prepared in the same manner as in Example 1, except that alumina (Al₂O₃) was used as the inorganic particles instead of the first surface-modified calcium carbonate.

### <Comparative Example 2>

A separator was prepared in the same manner as in Example 1, except that non-surface-modified calcium carbonate was used as the inorganic particles.

### <Experimental Example>

### <Experimental Example 1: Flame Retardancy Evaluation>

In order to evaluate the flame retardancy of the separators of each example and comparative example, a combustion test was conducted using a flame torch. For example, each separator was cut to a size of 13 mm by 125 mm and ignited. The self-extinguishing time was then measured as the time taken for the sample to extinguish naturally after ignition, in order to evaluate the flame retardancy. This procedure was repeated three times, and the average of the three measurements is shown in Table 1 below.

**[Table 1]**

| | Self-extinguishing time |
|---|---|
| Comparative Example 1 | 10.7 |
| Example 1 | 1.87 |
| Example 2 | 2.22 |

According to Table 1, the separators of Examples 1 and 2 exhibited substantially shorter self-extinguishing times after ignition, compared to the separator of Comparative Example 1, indicating superior flame retardancy.

### <Experimental Example 2: Evaluation of Dispersibility>

In order to evaluate the dispersibility of the slurries for forming porous coating layers in each Example and Comparative Example, dispersion stability was analyzed using a TURBISCAN LAB device. Each slurry was placed in a 30 mL vial to a height of 55 mm and backscattering values (%) and sedimentation rates (%/hr) over time were measured every 2 minutes for a total of 700 minutes. The results are shown in FIG. 1. The measurement temperature was 25 °C, and the wavelength of the light source used was 880 nm.

According to FIG. 1, the slurry including the first surface-modified calcium carbonate in Example 1 had a sedimentation rate of -1.88 (%/hr), and the lowest backscattering value of 45.11% relative to the initial value. The slurry including the second surface-modified calcium carbonate in Example 2 had a sedimentation rate of - 2.37 (%/hr), and the lowest backscattering value of 36.24% relative to the initial value. In contrast, the slurry including alumina in Comparative Example 1 had a sedimentation rate of -2.73 (%/hr), and the lowest backscattering value of 36.76%. The slope was obtained by measuring the average slope between 0 minutes and 700 minutes to derive the sedimentation rate.

As a result, the slurries including the surface-modified calcium carbonates in Examples 1 and 2 showed lower absolute values of sedimentation rate per hour compared to the slurry including alumina in Comparative Example 1, indicating slower sedimentation. From this, it was confirmed that the slurries including surface-modified calcium carbonate exhibited superior dispersibility compared to the slurry including alumina.

Meanwhile, the slurry including non-surface-modified calcium carbonate in Comparative Example 2 underwent sedimentation so rapidly during measurement that its dispersion stability could not be evaluated using the Turbiscan.

Based on the results of Examples 1 and 2 and Comparative Examples 1 and 2, it was confirmed that the separator using surface-modified calcium carbonate as inorganic particles in the coating layer exhibited significantly superior flame retardancy and markedly improved dispersion stability of the slurry for forming the coating layer compared to the separator that did not use surface-modified calcium carbonate.

While the technology of the present disclosure has been described with reference to embodiments, it may be appreciated by one skilled in the art of the present disclosure or one having ordinary skill in the art of the present disclosure that various modifications and changes may be made to the various embodiments of the present disclosure without departing from the technical scope of the various embodiments of the present disclosure defined in the claims attached herewith. Therefore, the technical scope of the various embodiments of the present disclosure is not limited to the detailed descriptions of the invention herein, but should be determined by the scope defined in the claims.

## Claims

1. A separator for a lithium secondary battery, the separator comprising:
a porous polymer substrate; and
a porous coating layer formed on at least one surface of the porous polymer substrate, the porous coating layer including inorganic particles and a binder polymer,
wherein the inorganic particles include surface-modified calcium carbonate (CaCO₃),
the surface-modified calcium carbonate includes first surface-modified calcium carbonate, second surface-modified calcium carbonate, or a combination thereof,
the first surface-modified calcium carbonate includes first calcium carbonate; and a fatty acid-derived functional group chemically bonded to a surface of the first calcium carbonate, and
the second surface-modified calcium carbonate includes second calcium carbonate; and an organosilane-derived functional group chemically bonded to a surface of the second calcium carbonate.

2. The separator according to claim 1, wherein the surface-modified calcium carbonate includes surface-modified precipitated calcium carbonate (PCC).

3. The separator according to claim 1, wherein average particle diameter D₅₀ of the surface-modified calcium carbonate is in a range of about 0.1 µm to 2.0 µm.

4. The separator according to claim 1, wherein the surface-modified calcium carbonate has an aspect ratio in a range of about 1.0 to 1.5.

5. The separator according to claim 1, wherein the fatty acid-derived functional group is derived from a fatty acid having 10 to 24 carbon atoms or a salt thereof.

6. The separator according to claim 1, wherein the organosilane-derived functional group is derived from an organosilane selected from vinyltrimethoxysilane, vinyltriethoxysilane, vinyltris(β-methoxyethoxy)silane, β-(3,4-epoxycyclohexyl)ethyltrimethoxysilane, γ-(2-aminoethyl)aminopropyltrimethoxysilane, γ-glycidoxypropyltrimethoxysilane, γ-glycidoxypropyltrimethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)-γ-aminopropylmethyldimethoxysilane, N-β(aminoethyl)-γ-aminopropyltrimethoxysilane, N-β(aminoethyl)-γ-aminopropyltriethoxysilane, 3-aminopropyltrimethoxysilane, 3-aminopropyltriethoxysilane, N-phenyl-γ-aminopropyltrimethoxysilane, γ-chloropropyltrimethoxysilane, γ-mercaptopropyltrimethoxysilane, bis-[3-(triethoxysilyl)propyl]-tetrasulfide (TESPT), bis-[3-(triethoxysilyl)propyl]-disulfide, or a combination thereof.

7. The separator according to claim 1, wherein the inorganic particles further include Pb(Zr,Ti)O₃ (PZT), Pb₁₋ₓLaₓZr_{1-y}Ti_{y}O₃ (PLZT), Pb(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y2O₃, Al₂O₃, TiO₂, SiC, AlO(OH), Al₂O₃·H₂O, lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂-based glass (LiₓSi_{y}S_{z}, 0<x<3, 0<y<2, 0<z<4), P₂S₅-based glass (LiₓP_{y}S_{z}, 0<x<3, 0<y<3, 0<z<7), and a mixture thereof.

8. The separator according to claim 1, wherein the binder polymer includes poly(methyl methacrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose, or a mixture of two or more thereof.

9. The separator according to claim 1, wherein the surface-modified calcium carbonate has a sedimentation rate (%/hr) of -2.5 or greater, as determined by Turbiscan analysis.

10. The separator according to claim 1, wherein a content of the fatty acid-derived functional group is in a range of about 0.5 parts by weight to 5 parts by weight based on 100 parts by weight of the first surface-modified calcium carbonate, and
a content of the organosilane-derived functional group is in a range of about 0.5 parts by weight to 5 parts by weight based on 100 parts by weight of the second surface-modified calcium carbonate.

11. A lithium secondary battery comprising:
a positive electrode;
a negative electrode; and
the separator of claim 1.
